# FASCICULE DE BREVET EUROPEEN

(11) **EP 2 353 278 B1**
(45) Date de publication et mention de la délivrance du brevet: **11.07.2018**
(21) Numéro de dépôt: 09755961.1
(22) Date de dépôt: 05.10.2009
(51) Int. Cl.: H04L 29/12, H04W 8/02, H04W 48/18, H04L 29/06

(54) **PROCEDE DE GESTION D'UN UTILISATEUR DANS UN RESEAU DE TELECOMMUNICATIONS, ET DISPOSITIF ASSOCIE**
VERFAHREN ZUR VERWALTUNG EINES BENUTZERS IN EINEM TELEKOMMUNIKATIONSNETZWERK UND ENTSPRECHENDE VORRICHTUNG.
METHOD FOR MANAGING A USER IN A TELECOMMUNICATIONS NETWORK AND RELATED DEVICE.

(30) Priorité: 07.10.2008 FR 0856796
(43) Date de publication de la demande: 10.08.2011
(73) Titulaire: 3G Licensing S.A., 2132 Luxembourg (LU)
(72) Inventeur: LE ROUZIC, Jean-Claude, F-22560 Trebeurden (FR); MOUQUET, Antoine, F-92400 Courbevoie (FR); DOREE, José, F-22300 Lannion (FR); MORAND, Lionel, F-92240 Malakoff (FR)
(74) Mandataire: Camolese, Marco
(86) Numéro de dépôt international: PCT/FR2009/051889
(87) Numéro de publication internationale: WO 2010/040938

(56) Documents cités:
- WO-A1-2008/046303
- DE-A1-102006 026 929
- QUALCOMM: "S2-061474: Use Cases for Multiple Registrations" INTERNET CITATION 1 janvier 2007 (2007-01-01), XP002450226 Extrait de l'Internet: URL:http://www.3gpp.org> [extrait le 2007-09-11]

## Description

### 1. Domaine de l'invention

Le domaine de l'invention est celui des télécommunications, et plus particulièrement celui d'un réseau de télécommunications auquel un terminal d'utilisateur peut accéder par l'intermédiaire de plusieurs réseaux d'accès.

Dans un réseau de télécommunications IP, dans lequel les échanges de signalisation sont, par exemple, basés sur le protocole SIP ("*Session Initiation Protocol*"*,* en anglais), un utilisateur est identifié par une adresse d'enregistrement ("*Address of record*" ou AOR, en anglais). Cet utilisateur peut utiliser cette adresse AOR sur un ou plusieurs équipements terminaux, lesquels se comportent comme des agents utilisateurs SIP (*SIP User Agents* ou UA, en anglais) aptes à recevoir des messages de signalisation adressés à l'adresse d'enregistrement AOR de l'utilisateur. Pour être joignable à l'adresse d'enregistrement AOR, un utilisateur doit préalablement enregistrer son terminal dans le réseau de télécommunications, en initiant une procédure d'enregistrement auprès d'un serveur d'enregistrement ou Registrar. Une telle procédure a pour effet d'associer à l'adresse d'enregistrement AOR de l'utilisateur une ou plusieurs adresses de contact ("*Address of Contact"* ou AOC, en anglais), vers la ou lesquelles un message de signalisation tel que, par exemple, une requête d'établissement d'appel, peut être routé directement.

Une telle association est stockée dans une base de données ou serveur de localisation ("*SIP Location service",* en anglais). Un tel serveur est interrogé par un serveur de proximité (*proxy server,* en anglais), sur réception d'une requête de signalisation destinée à l'adresse d'enregistrement AOR de l'utilisateur, en vue d'obtenir la ou les adresses de contact associées à cette adresse d'enregistrement AOR.

Il existe au moins trois cas dans lesquels une adresse d'enregistrement AOR peut être associée à plusieurs adresses de contact AOC :
- lorsque l'utilisateur utilise son adresse d'enregistrement AOR simultanément sur plusieurs équipements terminaux. A titre d'exemple, cet utilisateur dispose d'un terminal fixe et d'un terminal mobile à partir desquels il s'est enregistré dans le réseau de télécommunications avec une même adresse d'enregistrement du type a*lice@orange.com;*
- lorsque l'utilisateur utilise un équipement terminal bi- ou multi-modes, c'est-à-dire apte à se connecter simultanément à plusieurs réseaux d'accès au réseau de télécommunications. Par exemple, cet utilisateur dispose d'un terminal bi-mode apte à se connecter à un réseau d'accès Wi-Fi et à un réseau d'accès UMTS ("*Universal Mobile Telecommunications System",* en anglais) simultanément;
- une combinaison des deux cas précédents.

De telles situations posent problème lorsqu'il s'agit de router une requête de signalisation adressée à l'adresse d'enregistrement AOR de cet utilisateur. Selon le document RFC 3261 ("*Request For Comment,* en anglais) de l'organisme de normalisation IETF ("*Internet Engineering Task Force",* en anglais), le serveur de proximité est en charge de router un telle requête de signalisation vers une ou plusieurs adresses de contact qui forme un ensemble cible ("*Target Set",* en anglais). En particulier, lorsque l'ensemble cible contient plusieurs adresses, le serveur de proximité transmet la requête de signalisation à chacune des cibles, en parallèle ou séquentiellement. On parle d'une procédure de duplication ("*forking",* en anglais).

Sont connues de l'art antérieur des méthodes destinées à limiter ou à contrôler cette procédure de forking. En particulier, le document RFC 3841 de l'organisme de normalisation IETF enseigne comment permettre à un serveur de proximité de supprimer certaines adresses de contact AOC d'un ensemble cible afin de s'adapter aux préférences d'un utilisateur appelant et aux capacités du terminal d'un utilisateur appelé.

Un inconvénient d'un tel mécanisme est de ne pas permettre de choisir un type d'accès particulier vers lequel router une requête de signalisation.

La demande de brevet WO-2008/046303 divulgue un procédé d'enregistrement, auprès d'un réseau IMS, d'un terminal pouvant accéder audit réseau IMS via une pluralité de réseaux d'accès. Pour ce faire, une entité de contrôle de service (S-CSCF) du réseau IMS reçoit, pour chaque enregistrement du terminal, un message d'enregistrement contenant un identifiant du réseau d'accès utilisé par le terminal.

### Exposé de l'invention

L'invention concerne un procédé de gestion d'un utilisateur dans un réseau de télécommunications, ledit terminal étant connecté à au moins un réseau d'accès audit réseau.

L'invention est définie dans les revendications indépendantes. Des modes de réalisation particuliers sont définis dans les revendications dépendantes. Sur réception d'une requête d'enregistrement comprenant une adresse d'enregistrement de l'utilisateur, au moins une adresse de contact et au moins un type d'accès du terminal, le procédé selon l'invention met en oeuvre une étape d'enregistrement d'au moins une association entre l'adresse d'enregistrement de l'utilisateur, une adresse de contact et un type d'accès du terminal, dans une base de données.

Ainsi, avec l'invention, il devient possible d'obtenir, à partir d'une adresse d'enregistrement d'un utilisateur dans le réseau de télécommunications, une adresse de contact d'un terminal de l'utilisateur correspondant à un type d'accès particulier au réseau.

Selon un aspect de l'invention, le procédé de gestion comprend, au préalable, les étapes suivantes :
- obtention d'une liste d'adresses de contacts enregistrées dans le réseau pour l'adresse d'enregistrement de l'utilisateur; et
- déduction, à partir de la liste obtenue, d'au moins une adresse de contact correspondant au type d'accès de la requête.

De façon avantageuse, cet aspect de l'invention permet à une entité placée en aval de l'entité du réseau de télécommunications embarquant la fonction de registrar, d'obtenir les informations nécessaires à l'enregistrement des associations selon l'invention. En effet, il se peut qu'une telle entité, par exemple un serveur d'application en charge de l'exécution d'un service souscrit par l'utilisateur, ne reçoive pas l'adresse de contact affectée au terminal par l'entité registrar, mais l'adresse de contact de l'entité registrar elle-même.

Selon un autre aspect de l'invention, suite à ladite étape d'enregistrement et sur réception d'une requête d'établissement de session à destination de ladite adresse d'enregistrement de l'utilisateur, ledit procédé met en oeuvre les étapes suivantes :
- obtention d'au moins une association stockée comprenant ladite adresse d'enregistrement, un type d'accès et une adresse de contact du terminal dans un réseau d'accès;
- obtention d'un type d'accès par l'intermédiaire duquel accéder au terminal demandé;
- sélection d'au moins une adresse de contact à laquelle router ladite requête dans les associations stockées en fonction du type d'accès.

De façon avantageuse, le procédé permet, sur réception d'une requête d'établissement d'appel à destination de l'adresse d'enregistrement de l'utilisateur, de sélectionner au moins une adresse de contact parmi celles disponibles dans les associations enregistrées, en fonction d'un type d'accès. Ainsi, la requête de signalisation pourra être routée uniquement vers la ou les adresses de contact Associées au type d'accès demandé. Le type d'accès est obtenu de la requête d'établissement de session.

Un type d'accès est précisé dans la requête d'établissement de session. De façon avantageuse, le terminal d'utilisateur appelant peut insérer le type d'accès par lequel il souhaite que la communication soit établie avec le terminal appelé, lorsqu'il a connaissance des types d'accès auxquels ce dernier s'est connecté.

Le type d'accès est sélectionné en fonction de critères prédéterminés, par exemple des règles définies par l'opérateur de télécommunications. A titre d'exemple, de telles règles peuvent prendre en compte différents paramètres tels que la charge supportés par chacun des différents d'accès ou le type de service demandé.

L'invention concerne également un dispositif de gestion d'un utilisateur dans un réseau de télécommunications. Un tel dispositif est apte à mettre en oeuvre le procédé de gestion qui vient d'être décrit.

Un tel dispositif peut être embarqué dans un équipement du réseau de télécommunications, tel qu'un serveur de proximité ou encore un serveur d'application. En variante, il peut aussi être externe à ces équipements.

Corrélativement, l'invention concerne donc un serveur de proximité dans un réseau de télécommunications, comprenant des moyens de réception d'une requête d'enregistrement comprenant une adresse d'enregistrement d'un utilisateur, un type d'accès et une adresse de contact d'un terminal à partir duquel ledit utilisateur s'est connecté à au moins un réseau d'accès audit réseau, des moyens de réception d'une requête d'établissement de session à destination de l'adresse d'enregistrement dudit utilisateur dans le réseau de télécommunications et un dispositif de gestion dudit utilisateur selon l'invention.

De façon connue, un tel serveur peut mettre en oeuvre une fonction de registrar et une fonction de traitement d'une requête d'établissement de session. Selon l'invention, un tel serveur est apte à sélectionner au moins une adresse de contact correspondant au type d'accès demandé, vers laquelle router la requête. Corrélativement, l'invention concerne aussi un serveur d'application dans un réseau de télécommunications comprenant des moyens de réception d'une requête d'enregistrement comprenant une adresse d'enregistrement d'un utilisateur et un type d'accès d'un terminal à partir duquel ledit utilisateur s'est connecté à au moins un réseau d'accès audit réseau, des moyens de réception d'une requête d'établissement de session à destination de l'adresse d'enregistrement dudit utilisateur dans le réseau de télécommunications et un dispositif de gestion dudit utilisateur selon l'invention.

De façon connue, un tel serveur d'application est invoqué pour l'exécution d'un service souscrit par un utilisateur du réseau de télécommunications. Selon l'invention, il est apte à sélectionner au moins une adresse de contact vers laquelle router la requête en fonction d'un type d'accès. Un avantage est qu'il a connaissance des règles prédéterminées par l'opérateur du réseau pour l'exécution du service demandé et qu'il peut donc prendre ces règles en compte dans cette sélection.

L'invention concerne en outre un procédé de transmission d'une requête d'établissement de session dans un réseau de télécommunications, à destination d'une adresse d'enregistrement d'un utilisateur, comprenant une étape d'insertion d'un type d'accès représentatif d'un réseau d'accès par l'intermédiaire duquel joindre l'utilisateur demandé.

Un tel procédé peut avantageusement être mis en oeuvre par un dispositif de transmission d'une requête d'établissement de session selon l'invention, comprenant des moyens d'insertion dans la requête d'établissement de session d'un type d'accès représentatif d'un réseau d'accès par l'intermédiaire duquel joindre l'utilisateur demandé, ladite requête étant destinée à être traitée par un dispositif de gestion d'un utilisateur selon l'invention.

Le dispositif de transmission selon l'invention peut être embarqué dans un équipement du réseau de télécommunications apte à échanger des messages de signalisation avec un terminal d'utilisateur.

Corrélativement, l'invention concerne aussi un équipement, apte à échanger des messages de signalisation avec un terminal d'un utilisateur connecté à un réseau de télécommunications par l'intermédiaire d'au moins un réseau d'accès audit réseau et comprenant le dispositif de transmission d'une requête d'établissement de session selon l'invention.

Selon un aspect de l'invention, ledit équipement est un terminal d'utilisateur connecté au réseau de télécommunications. Un tel terminal a connaissance d'un type d'accès auquel un terminal de l'utilisateur qu'il souhaite appeler est connecté et il le mentionne dans sa requête. Un avantage est que l'utilisateur appelant ou son terminal peut choisir par quel type d'accès joindre son interlocuteur en fonction de la session que l'utilisateur souhaite initier avec lui.

Selon un autre aspect de l'invention, ledit équipement est un serveur d'application du réseau de télécommunications. Lorsque le terminal n'a pas connaissance d'un type d'accès disponible pour un terminal de l'utilisateur qu'il souhaite appeler, un autre équipement, placé en coupure du flux de signalisation de l'appel peut insérer une telle information à sa place. De façon avantageuse, un serveur d'application du réseau de télécommunications a t connaissance d'un contexte de l'établissement de cette session et peut donc prendre en compte des éléments de ce contexte pour sélectionner un type d'accès adapté.

Dans un mode particulier de réalisation, les différentes étapes des procédés de gestion et de transmission qui viennent d'être décrits sont déterminées par des instructions de programmes d'ordinateurs.

En conséquence, l'invention vise aussi un programme d'ordinateur sur un support d'informations, ce programme étant susceptible d'être mis en oeuvre dans un dispositif de gestion d'un utilisateur ou plus généralement dans un ordinateur, ce programme comportant des instructions adaptées à la mise en oeuvre des étapes d'un procédé de gestion tel que décrit ci-dessus.

En conséquence, l'invention vise aussi un programme d'ordinateur sur un support d'informations, ce programme étant susceptible d'être mis en oeuvre dans un dispositif de transmission ou plus généralement dans un ordinateur, ce programme comportant des instructions adaptées à la mise en oeuvre des étapes d'un procédé de transmission tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré, par exemple un élément matériel (ou hardware) dans lequel l'un ou l'autre des programmes est incorporé, le circuit étant adapté pour exécuter ou pour être utilisé dans l'exécution de l'un ou l'autre des procédés en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un terminal d'utilisateur connecté à un réseau de télécommunications mettant en oeuvre l'invention.
- la figure 2 illustre de façon schématique la structure d'un dispositif de gestion d'un utilisateur du réseau de télécommunications selon l'invention;
- la figure 3 présente les étapes d'un procédé de gestion d'un utilisateur du réseau de télécommunications selon l'invention;
- la figure 4 illustre de façon schématique la structure d'un dispositif de transmission d'une requête d'établissement de session par un équipement selon l'invention;
- la figure 5 présente les étapes d'un procédé de transmission d'une requête d'établissement de session selon l'invention;
- la figure 6 présente un diagramme des flux échangés entre des terminaux d'utilisateurs et le réseau de télécommunications, selon un premier mode de réalisation de l'invention; et
- la figure 7 présente un diagramme des flux échangés entre des terminaux d'utilisateurs et le réseau de télécommunications, selon un deuxième mode de réalisation de l'invention.

### Description d'un mode de réalisation particulier de l'invention

Le principe général de l'invention repose sur l'enregistrement d'associations comprenant une adresse d'enregistrement d'un utilisateur, un type d'accès par l'intermédiaire duquel un terminal de l'utilisateur s'est enregistré au réseau de télécommunications et une adresse de contact à laquelle il est possible de joindre le terminal via ce type d'accès.

Lorsqu'un utilisateur s'est enregistré dans le réseau par l'intermédiaire d'un ou plusieurs terminaux connectés à plusieurs réseaux d'accès, le réseau stocke autant d'associations que d'enregistrements réalisés avec la même adresse d'enregistrement, chaque association comprenant un type d'accès et une adresse de contact spécifiques.

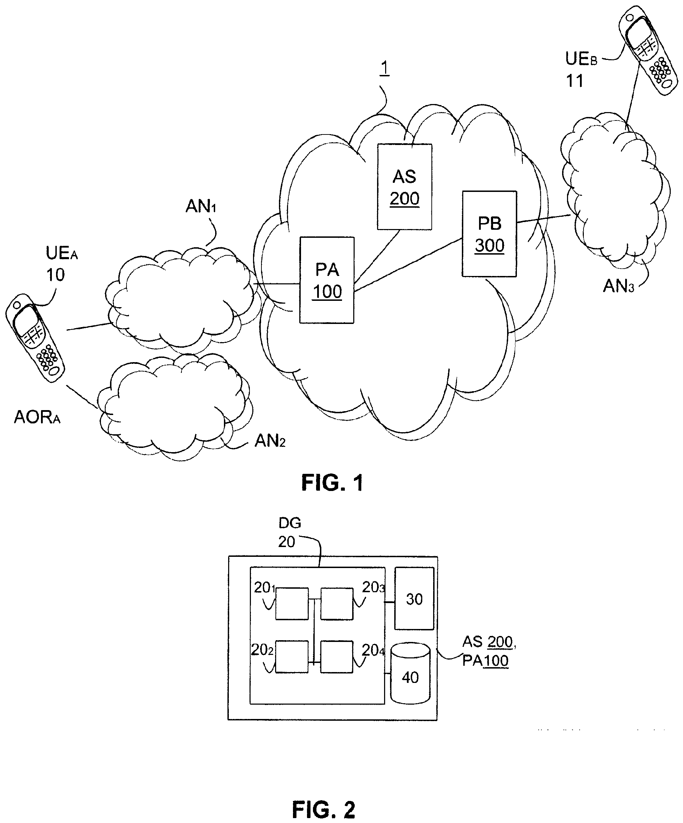

En relation avec la **figure 1****,** on considère un terminal d'utilisateur UE_{A} 10 connecté à un réseau de télécommunications 1 par l'intermédiaire de deux réseaux d'accès AN₁ et AN₂. A titre d'exemple, ces réseaux peuvent être de type Wi-Fi ou 802.11 ou de type GERAN/UTRAN. On notera toutefois que l'invention n'est pas limitée au cas de deux réseaux, mais s'applique quel que soit le nombre de réseaux d'accès auxquels l'utilisateur est connecté.

On suppose que l'utilisateur de ce terminal UE_{A} a souscrit un abonnement auprès de l'opérateur du réseau 1 et a obtenu une adresse d'enregistrement AOR_{A}, qu'il utilise pour s'enregistrer au réseau 1. Une telle adresse peut être, par exemple, du type *alice@orange.com.*

On notera que l'invention n'est pas limitée au cas d'un seul terminal, mais qu'elle s'applique aussi au cas où l'utilisateur s'est enregistré au réseau 1 à partir de plusieurs terminaux à l'aide de la même adresse d'enregistrement AOR_{A}.

Lorsqu'il souhaite s'enregistrer au réseau 1 par l'intermédiaire du réseau d'accès AN1, le terminal d'utilisateur UE_{A} émet, de façon connue, une requête d'enregistrement REG comprenant l'adresse d'enregistrement AOR_{A} de l'utilisateur, un type d'accès AT₁ représentatif du réseau d'accès AN₁ emprunté et une adresse de contact AOC₁ à laquelle il peut être joint via le réseau d'accès AN₁, comme spécifié dans le document RFC 3261 de l'organisme IETF spécifiant le protocole de signalisation SIP. Le type d'accès est avantageusement indiqué dans un champ P-Access-Network-Info ou PANI de la requête REG, comme spécifié dans le document TS24.229 de l'organisme de normalisation 3GPP.

Une telle requête est prise en charge par une entité du réseau PA 100 réalisant une fonction d'enregistrement ou Registrar. Dans un réseau mettant en oeuvre un protocole de signalisation de type SIP, il s'agit d'un serveur de proximité SIP. Dans un réseau intégrant une architecture de type IMS, il s'agit d'un serveur de type S-CSCF *("Serving Call Session Control Function",* en anglais). La fonction Registrar permet notamment d'associer l'adresse d'enregistrement AOR_{A} de l'utilisateur à l'adresse de contact AOC₁, à laquelle il peut être joint via le réseau d'accès AN₁. Un exemple de requête REG comprenant une indication de type d'accès Wi-FI ou 802.11 dans le champ PANI est présenté ci-dessous :

```
 REGISTER sip:orange.com SIP/2.0
 From: Alice <sip:alice@orange.com>;tag=7abfadfb6
 To: Alice <sip:alice@orange.com>
 Contact: <sip:bob@2a01:c001::c0a8:0121:5060>
 P-Access-Network-info: IEEE-802.11
```

Selon l'invention, les associations enregistrées par le procédé de gestion selon l'invention peuvent prendre la forme suivante :

| AOR | access | Contact address |
|---|---|---|
| sip:alice@orange.com | 3GPP-UIRAN-FDD | sip:alice@192.168.1.33:5060 |
| sip:alice@orange.com | IEEE-802.11 | sip:alice@2a01:c001::c0a8:0121:5060 |

En réponse à sa requête, le terminal d'utilisateur UE_{A} reçoit un message d'acquittement.

Le terminal d'utilisateur procède de façon analogue pour s'enregistrer dans le réseau via le réseau d'accès AN₂ avec l'adresse de contact AOC₂.

En variante, le terminal UE_{A} peut s'enregistrer en une seule fois à l'aide des deux adresses de contact AOC1, AOC2 et les deux types d'accès AT1, AT2. Dans ce cas, le champ PANI comprend généralement le type d'accès représentatif du réseau d'accès par lequel a transité la requête d'enregistrement REG, par exemple AT1. Le terminal peut avantageusement indiquer les types d'accès correspondant à chaque adresse de contact dans un champ de l'en-tête "Contact" comme indiqué dans l'exemple ci-dessous :

```
 REGISTER sip:orange.com SIP/2.0
 From: Alice <sip:Alice@orange.com>;tag=7abfadfb6
 To: Alice <sip:bob@orange.com>
 Contact: <sip:Alice@2a01:c001::c0a8:0121:5060>;access=IEEE-802.11
 contact: <sip:Alice@192.168.1.33:5060>;access=3GPP-UTRAN-FDD
```

On considère le terminal UE_{B} 11 d'un utilisateur Bob qui possède, à titre d'exemple, une adresse d'enregistrement AOR_{B} du type *Bob@atlanta.com.* Le terminal UE_{B} est connecté au réseau 1 par l'intermédiaire d'un réseau d'accès AN₃. Lorsque le terminal UE_{B} 11, une fois enregistré dans le réseau 1, souhaite établir une session de communication avec un autre terminal d'utilisateur, par exemple le terminal UE_{A} 10, il émet une requête d'établissement de session INV dans le réseau via le réseau d'accès AN₃. Selon le protocole SIP, il peut s'agir par exemple d'une requête de type INVITE.

Une telle requête comprend, de façon connue une adresse d'enregistrement AOR_{A} de l'utilisateur demandé. Elle est reçue par le serveur de proximité PB qui la transmet au serveur de proximité PA en charge de l'utilisateur enregistré à l'adresse AOR_{A}. Le serveur de proximité PA peut, si besoin, invoquer un serveur d'application AS 200 en charge d'exécuter le service demandé dans la requête d'établissement de session.

Selon l'invention, le réseau de télécommunications 1 comprend un dispositif de gestion d'un utilisateur. En relation avec la **figure 2****,** un tel dispositif DG 20 peut être embarqué dans le serveur de proximité PA 100 ou dans le serveur d'application AS 200. Le dispositif DG 20 de gestion d'un utilisateur selon l'invention comprend les éléments matériels que l'on retrouve classiquement dans un ordinateur conventionnel ou un équipement du réseau de télécommunications 1, à savoir un processeur 20₁, une mémoire vive de type RAM 20₂, une mémoire morte de type ROM 20₃, des moyens 20₄ de télécommunications avec le réseau 1 Les moyens de télécommunication 20₄ sont donc des moyens d'interface avec des moyens de communication du serveur de proximité PB 200 ou du serveur d'application AS 300, tels que les moyens 30.

En variante, le dispositif de gestion DG 20 peut être aussi externe à ces équipements. Toutefois, dans le cas où le dispositif serait externe au terminal d'utilisateur 11, de tels moyens de télécommunications seraient directement connectés au réseau de télécommunications 1.

Le dispositif DG 20 est relié à une base de données 40, de type *SIP Location Service,* dans laquelle il stocke les associations selon l'invention. Cette base de données peut être interne ou externe au dispositif DG 20, ou à l'équipement PA 100 , AS 200 embarquant le dispositif DG 20.

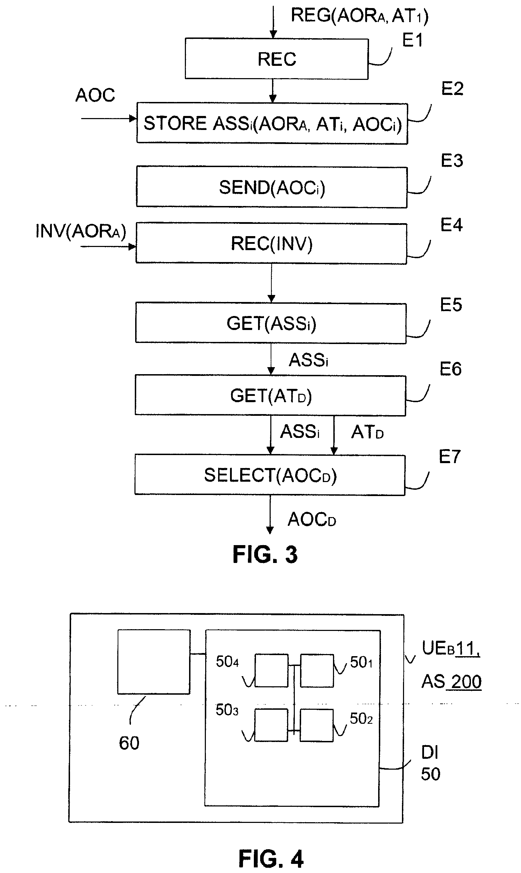

La mémoire morte 20₃ constitue un support d'enregistrement conforme à l'invention. Ce support mémorise le programme d'ordinateur conforme à l'invention. Ce programme comporte des instructions pour l'exécution des étapes du procédé de gestion d'un terminal d'utilisateur conforme à l'invention qui va maintenant être décrit en référence à la **figure 3****.**

Le procédé de gestion selon l'invention reçoit, lors d'une étape E1, la requête d'enregistrement REG en provenance du terminal d'utilisateur UE_{A} et via le réseau d'accès AN₁. Elle comprend une adresse de contact AOC₁, un type d'accès AT1 représentatif du réseau d'accès AN₁ et l'adresse d'enregistrement AOR_{A} de l'utilisateur.

En E2, le procédé de gestion selon l'invention stocke en mémoire, par exemple dans la base de données 40 de type *SIP Location service,* une association ASS₁ comprenant l'adresse d'enregistrement AOR_{A}, le type d'accès AT₁ et l'adresse de contact AOC₁. En E3, un message de réponse est envoyé au terminal

Dans une étape E4, une requête INV d'établissement de session est reçue en provenance d'un terminal d'utilisateur UE_{B} 11 et à destination de l'adresse d'enregistrement AOR_{A}.

Dans une étape E5, le procédé selon l'invention obtient les associations ASSᵢ, i étant un entier supérieur ou égal à 1, stockées dans la base de données pour l'adresse d'enregistrement AOR_{A}.

Dans une étape E6, il obtient en outre un type d'accès AT_{D} représentatif d'un réseau d'accès par l'intermédiaire duquel router la requête d'établissement de session au terminal UE_{A} de l'utilisateur appelé.

Dans une étape E7, une adresse de contact AOCⱼ est sélectionnée parmi celles des associations stockées, en fonction du type d'accès demandé AT_{D}.

Ainsi, selon l'invention, le serveur de proximité PA 100 en charge de router la requête d'établissement de session INV vers le terminal UE_{A} obtient une adresse de contact AOC_{D} dans le réseau d'accès correspondant au type d'accès demandé, vers laquelle router la requête INV. Lorsque l'utilisateur demandé n'est enregistré au réseau que par un seul terminal UEA connecté au réseau d'accès demandé, le serveur de proximité PA 100 obtient une unique adresse de contact et n'a donc pas à déclencher de mécanisme de forking pour joindre l'adresse d'enregistrement AOR_{A} demandée.

En revanche, lorsque l'utilisateur dispose de plusieurs terminaux enregistrés au réseau 1 via le type d'accès demandé, le serveur de proximité PA 100 n'obtient que les adresses de contact associées à ce type d'accès. Il ne met donc en oeuvre qu'un mécanisme de forking limité. De façon avantageuse, le forking peut être complètement évité, en combinant l'invention à des mécanismes d'identification connus du terminal d'utilisateur appelé, qui seront décrits plus en détails dans la suite de cette description.

Selon un premier mode de réalisation de l'invention, le type d'accès AT_{D} demandé est obtenu dans la requête d'établissement de session. En d'autres termes, la requête INV comprend un champ indiquant le type d'accès AT_{D}.

Le type d'accès AT_{D} peut être inséré dans la requête par un dispositif DI 50 embarqué dans un équipement ou agent d'utilisateur ("*User Agent",* en anglais), apte à recevoir et transmettre des messages de signalisation par exemple selon le protocole SIP. Un tel User Agent peut être le terminal d'utilisateur appelant UE_{B} ou encore le serveur d'application AS 200 en charge d'exécuter le service demandé.

En relation avec la **figure 4****,** le dispositif DI 50 de gestion d'un utilisateur selon l'invention comprend les éléments matériels que l'on retrouve classiquement dans un ordinateur conventionnel ou un équipement du réseau de télécommunications 1, à savoir un processeur 50₁, une mémoire vive de type RAM 50₂, une mémoire morte de type ROM 50₃, des moyens 50₄ de télécommunications avec le réseau 1. Dans l'exemple de la figure 4, le dispositif DI selon l'invention est intégré dans le terminal 11 ou dans le serveur d'application AS 200. Les moyens de télécommunication 50₄ sont donc des moyens d'interface avec des moyens de communication du terminal UE_{B} 11 ou du serveur d'application AS 200, tels que les moyens 60. Toutefois, en variante, le dispositif DI 50 peut être aussi externe à ces équipements. Dans ce cas, de tels moyens seraient directement connectés au réseau de télécommunications 1.

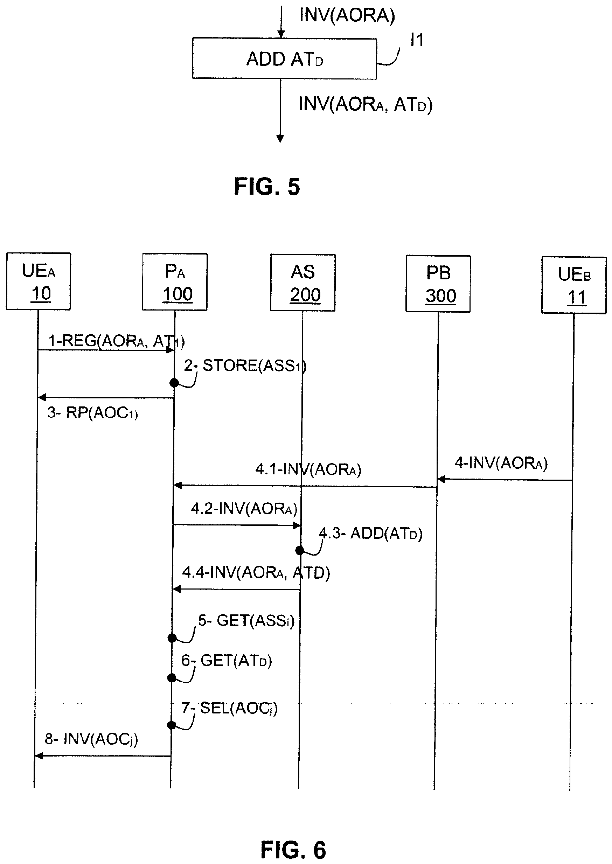

La mémoire morte 50₃ constitue un support d'enregistrement conforme à l'invention. Ce support mémorise le programme d'ordinateur conforme à l'invention. Ce programme comporte des instructions pour l'exécution des étapes du procédé de transmission d'une requête d'établissement de session conforme à l'invention qui va maintenant être décrit en référence à la **figure 5****.**

Un tel procédé comprend une étape d'insertion I1 du type d'accès AT_{D} dans la requête INV d'établissement de session émise à destination de l'adresse d'enregistrement AOR_{A}.

Selon une première variante, le type d'accès ATD peut être inséré dans un nouveau champ de type "Access" de l'adresse REQUEST URI ("*Uniform Resource Identifier",* en anglais) de la requête INV. A titre d'exemple, la requête INV selon l'invention peut prendre la forme suivante :
- pour l'accès de type AT1 :

   ```
 INVITE sip:orange.com;access=IEEE-802.11 SIP/2.0
 From: Bob <sip:bob@atlanta.com>;tag=7abfadfb6
 To: Alice <sip:Alice@orange.com>
 contact: <sip:bob@10.21.108.21:5060>
```
- pour l'accès de type AT2 :

   ```
 INVITE sip:orange.com;access=3GPP-UTRAN-FDD SIP/2.0
 From: Bob <sip:Bob@atlanta.com>;tag=7abfadfb6
 To: Alice <sip:Alice@orange.com>
 Contact: <sip:Bob@10.21.108.21:5060>
```

De façon avantageuse, cette première variante est mise en oeuvre par le terminal d'utilisateur appelant UE_{B}. On suppose qu'il a obtenu le ou les types d'accès disponibles pour le terminal d'utilisateur appelé lors d'échanges de signalisation précédents.

Selon une deuxième variante, le type d'accès AT_{D} est inséré dans la requête IN en valorisant un champ particulier d'un nouvel identifiant spécifique du terminal d'utilisateur appelé UE_{B}. Un tel identifiant peut être, par exemple, une extension d'un identifiant de type UUID URN *("Universally Unique IDentifier Uniform Resource Name",* en anglais) qui identifie de façon unique le terminal d'utilisateur UE_{B} et reste inchangé, même lorsque le terminal est redémarré. Plus précisément, le nouveau type d'identifiant UUID URN considéré, appelé sub-UUID URN, permet d'identifier un sous-ensemble d'une entité, par exemple un terminal d'utilisateur, à laquelle on a associé de façon connue un UUID URN. Un tel sous-ensemble peut être distingué selon un critère particulier. Selon l'invention, ce critère est un critère d'accès.et l'identifiant sub-UUID considéré identifie de façon unique un couple (terminal d'utilisateur, type d'accès).

A titre d'exemple, l'identifiant sub-UUID suivant peut être inséré dans la requête d'établissement de session INV selon l'invention :

```
 urn:sub-uuid:f81d4fae-7dec-11d0-a765-0a0c91e6bf6:access:IEEE-802.11
```

Selon une troisième variante, le type d'accès demandé ATD peut être inséré dans la requête INV en valorisant un identifiant du terminal d'utilisateur de type GRUU *("Globally Routable UA URI Uniform Resource Identifier",* en anglais) tel que spécifié dans la spécification draf-ietf-sip-gruu de l'organisme de normalisation IETF. Un tel identifiant identifie de façon unique une association entre une adresse d'enregistrement AOR et un terminal d'utilisateur, ou plus généralement un User Agent. Un identifiant de type GRUU est obtenu par le terminal d'utilisateur lors de son enregistrement au réseau de télécommunications, à condition que le terminal ait spécifié dans sa requête d'enregistrement qu'il souhaitait recevoir cet identifiant en retour, en ajoutant la séquence *"+sip.instance.com"* dans l'en-tête contact de la requête REG d'enregistrement. Il existe deux types d'identifiants GRUU :
- un identifiant temporaire temp-gruu, dont la durée de validité est limitée; un nouveau temp-gruu est fourni à chaque rafraîchissement de l'enregistrement; et
- un identifiant public pub-gruu, dont la validité est permanente pendant la durée de l'enregistrement.

Le terminal d'utilisateur peut ensuite utiliser cet identifiant GRUU dans ses messages de signalisation à destination d'autres user agents. Ainsi, lorsqu'un terminal tel que le terminal UE_{B} souhaite établir une session avec un terminal particulier tel que le terminal UE_{A}, il spécifie l'identifiant GRUU de ce terminal dans sa requête INV d'établissement de session. Un inconvénient est que si ce même terminal UE_{A} est enregistré au réseau par l'intermédiaire de plusieurs réseaux d'accès AN₁, AN₂ le serveur de proximité PA 100 va se trouver contraint de déclencher le mécanisme de forking vers les différents adresses de contact du terminal appelé.

Selon cette troisième variante de l'invention, le type d'accès est inséré dans la requête d'établissement de session INV au sein d'un identifiant de type GRUU modifié. On définit, selon l'invention, un identifiant de type AGRUU pour "Access-specific GRUU". Un tel identifiant AGRUU, qu'il soit temporaire ou public, peut comprendre, soit une indication permettant d'obtenir le type d'accès associé à l'AOR et au terminal d'utilisateur, soit directement le type d'accès.

On présente deux exemples d'identifiants AGRUU selon l'invention :

```
 pub-agruu="sip:alice@orange.com;agr=urn:sub-uuid:07e2b051-8213-
 ee2f-589a-ff5f36e19409:access:3GPP-UTRAN-FDD"
 tempagruu="sip:tagruu.7hs==ce72deb4cfba2b453c1546496b73b4e@orang
 e.com;agr"
```

Selon l'invention, on suppose que le terminal d'utilisateur UEA a préalablement reçu ces identifiants AGRUUs en réponse à sa requête d'enregistrement auprès du serveur de proximité PA 100 et qu'il les a communiqués au terminal UE_{B} lors d'échanges de signalisation précédents. On peut supposer en outre que le terminal UE_{B} les a obtenus par tout autre moyen.
Le type d'accès ATD, par exemple 802.11 peut être obtenu à partir des identifiants AGRUU public ou temporaires insérés dans la partie REQUEST URI de la requête SIP INVITE.

A titre d'exemple, on considère la requête d'établissement de session SIP suivante : 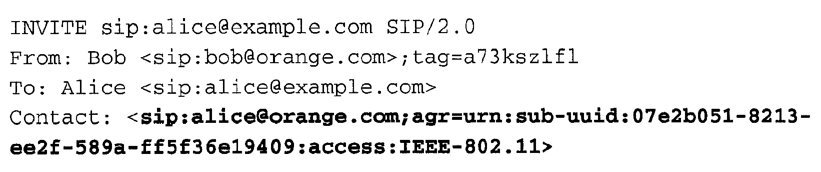 L'AGRUU est la séquence indiquée en caractères gras.

Un avantage des identifiants de type UUID URN et GRUU qui viennent d'être décrits est que lorsqu'ils sont insérés dans la requête d'établissement de session INV, ils permettent en outre au serveur de proximité d'identifier le terminal d'utilisateur UEA ciblé par l'utilisateur appelant, dans le cas où l'utilisateur appelé se serait enregistré dans le réseau 1 à partir de plusieurs terminaux connectés à un même type de réseau d'accès, et donc de sélectionner la ou les adresses de contacts associées à ce terminal.

On comprend donc que la combinaison de l'invention et de l'usage des identifiants précités permet avantageusement de sélectionner une unique adresse de contact associée à l'identifiant d'un terminal de l'utilisateur appelé et à un type d'accès et donc de bloquer tout mécanisme de forking par le serveur de proximité en charge de router la requête INV vers les terminaux de l'utilisateur appelé.

En relation avec la **figure 6****,** on présente maintenant un diagramme des flux de signalisation échangés entre les terminaux d'utilisateurs UE_{A}, UE_{B} et des équipements du réseau de télécommunications PA 100, AS 200 et PB 300 selon un premier mode de réalisation de l'invention. Selon ce premier mode de réalisation, le procédé de gestion de l'utilisateur selon l'invention est mis en oeuvre dans le serveur de proximité PA 100.

Dans une première phase, dite phase d'enregistrement, le terminal UE_{A} 10 s'enregistre auprès du serveur de proximité PA 100. On suppose qu'il s'enregistre par l'intermédiaire des réseaux d'accès AN₁ et AN₂ et que, par conséquent, la base de données du serveur de proximité PA 100 stocke deux enregistrements d'associations ASS₁ et ASS₂ selon l'invention.

Dans une deuxième phase, dite phase d'établissement de session, le terminal UE_{B} émet une requête d'établissement de session à destination de l'adresse d'enregistrement AOR_{A} de l'utilisateur du terminal UE_{A}.. Selon une première variante, le terminal UE_{B} 11 indique un type d'accès AT_{D} par l'intermédiaire duquel il souhaite que la session soit établie avec le terminal UE_{A}. Selon une deuxième variante, c'est un autre agent d'utilisateur tel que, par exemple, le serveur d'application AS 200 qui insère ce champ dans la requête INV selon une des variantes de l'invention qui viennent d'être décrites.

La requête INV comprenant l'adresse d'enregistrement AOR_{A} du terminal UE_{A} et le type d'accès demandé AT_{D} est transmise au serveur de proximité PA 100.

Sur réception de la requête INV, le dispositif de gestion DG 20 du serveur de proximité PA 100 met en oeuvre le procédé selon l'invention et sélectionne l'adresse de contact AOCⱼ correspondant au type d'accès AT_{D} demandé. Il route ensuite la requête vers cette adresse de contact.

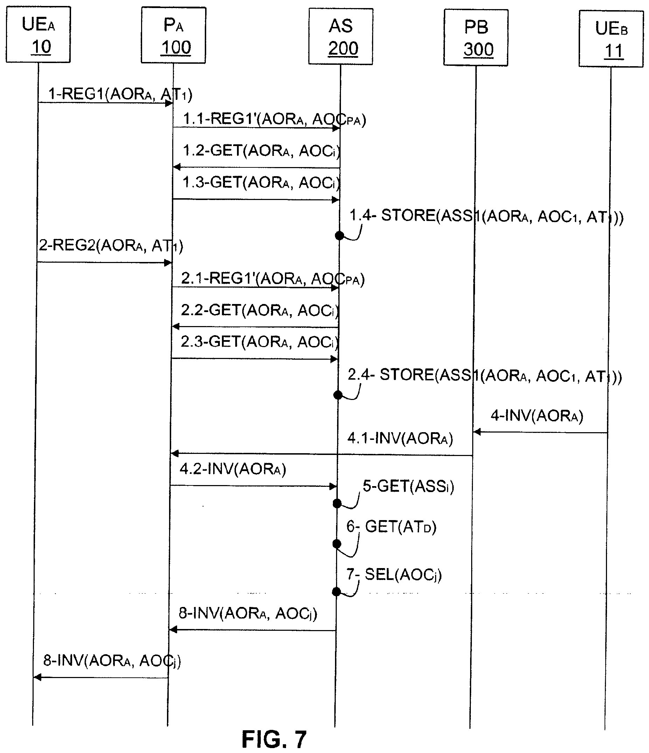

En relation avec la **figure 7****,** on présente maintenant un diagramme des flux de signalisation échangés entre les terminaux d'utilisateurs UE_{A}, UE_{B} et les équipements du réseau de télécommunications selon un deuxième mode de réalisation de l'invention. Selon ce deuxième mode de réalisation, le procédé de gestion de l'utilisateur selon l'invention est mis en oeuvre dans le serveur d'application AS 200. On se place donc dans un réseau 1 mettant en oeuvre une architecture IMS ("*IP Multimedia Subsystem",* en anglais), telle que décrite dans le document TS.24229 de l'organisme de normalisation 3GPP.

Dans la phase d'enregistrement, le terminal UE_{A} 10 s'enregistre auprès du serveur de proximité PA 100, de façon connue. On suppose qu'il s'enregistre par l'intermédiaire du réseau d'accès AN₁ et du réseau AN₂. De façon connue, le serveur de proximité PA 100 informe le serveur d'application AS 200 de la ou des requêtes d'enregistrement REG₁, REG₂ qu'il a reçues, en lui transmettant un message de type third party register 1/3 REG₁, 1/3 REG₂, tel que défini dans la spécification TS 24.229 de l'organisme de normalisation 3GPP ("*third Generation Partnership Project",* en anglais). dans la suite, on considère que le terminal UE_{A} a émis deux requêtes d'enregistrement REG₁, REG₂ successives pour s'enregistrer au réseau 1, respectivement depuis les réseaux d'accès AN₁ et AN₂. Un tel message ne comprend pas toutes les informations contenues dans la ou les requêtes d'enregistrement REG₁, REG₂ d'origine. En particulier, elle peut contenir ou non le type d'accès par l'intermédiaire duquel le terminal d'utilisateur s'est connecté au réseau. Par ailleurs, certaines des informations de la requête d'enregistrement ont pu être modifiées. C'est le cas, par exemple, de l'adresse de contact du terminal UE_{A} que le serveur de proximité PA 100 remplace au préalable par sa propre adresse de contact AOC_{PA}.

Selon une première variante, on considère le cas où le message third party register contient l'adresse d'enregistrement de l'utilisateur AOR_{A}, le type d'accès AT₁ du terminal et l'adresse de contact AOC_{PA} du serveur de proximité PA 100. Selon l'invention, le serveur d'application AS 200, sur réception d'un tel message, envoie au serveur de proximité PA 100 une requête de listage ou register de listage. La sémantique d'une telle requête est spécifiée dans la spécification RFC 3261 de l'IETF En retour, le serveur d'application AS 100 reçoit une liste des associations entre l'adresse d'enregistrement AOR_{A} de l'utilisateur et des adresses de contacts dans les différents d'accès auxquels le terminal de l'utilisateur a pu se connecter. En l'espèce, il obtient, lors du premier enregistrement REG₁ du terminal, au réseau AN₁, une liste comprenant l'association (AOR_{A}, AOC1). Il peut donc ensuite stocker une association ASS₁(AOR_{A}, AOC₁, AT1) en mémoire, selon l'invention. Lors du deuxième enregistrement REG2, il reçoit une liste d'associations comprenant les deux associations (AORA, AOC1) et (AORA, AOC2). La connaissance du type d'accès AT2 contenu dans la deuxième requête d'enregistrement REG2 lui permet de déduire l'adresse de contact AOC2 correspondant au type d'accès AT2 et de constituer puis stocker en mémoire la deuxième association ASS2 selon l'invention.

On comprend que chaque nouvelle requête de listage permet de mettre à jour les associations stockées en mémoire par le serveur d'application AS 200, lequel est donc en mesure de ne conserver que les associations actives.

De façon avantageuse, le serveur d'application peut réitérer sa requête de listage régulièrement toutes les X secondes, X entier supérieur à 0. Un avantage est de maintenir la table d'associations à jour. Le nombre X de secondes peut être choisi en fonction d'une durée de bail moyenne d'un enregistrement dans le réseau.

Selon une deuxième variante, le serveur de proximité PA 100 insère l'adresse de contact du terminal dans le message third party register.

De façon connue, le serveur de proximité peut, dans le cadre d'une architecture IMS, exécuter des règles de filtrage ("*Enhanced Filter Criteria",* en anglais) contenues dans un profil de l'utilisateur. Ces règles, ainsi que les procédures mises en oeuvre par le serveur de proximité pour les exécuter, sont décrites notamment dans les documents TS24.229 et TS24.218 de l'organisme de normalisation 3GPP.

Selon l'invention, le serveur de proximité peut exécuter une nouvelle règle contenue dans un profil de l'utilisateur qui lui commande d'insérer l'intégralité de la requête d'enregistrement REG₁, REG₂ dans le message third party register qu'il adresse au serveur d'application AS 200.

Dans ce cas, le serveur d'application AS stocke les associations ASS₁, ASS₂ selon l'invention, directement et sans avoir recours à des échanges de signalisation supplémentaires avec le serveur de proximité PA 100.

Dans la phase d'établissement de session, le terminal UE_{B} émet une requête d'établissement de session à destination de l'adresse d'enregistrement AOR_{A} de l'utilisateur du terminal UE_{A}. On suppose que cette requête peut ou non contenir le type d'accès AT_{D} demandé pour l'utilisateur appelé.

La requête INV est d'abord reçue par le serveur de proximité P_{B} 300, puis transférée au serveur de proximité PA 100, qui invoque le serveur d'application AS 200 en charge d'exécuter le service demandé. Sur réception d'une telle requête, le serveur AS 200 récupère les associations ASS₁, ASS₂ qu'il a stockées pour l'utilisateur appelé et décide d'un type d'accès AT_{AS} vers lequel envoyer la requête INV en fonction de critères prédéterminés et des réseaux d'accès sur lesquels l'utilisateur appelé est connecté. A titre d'exemple, de tels critères peuvent prendre en compte les ressources disponibles sur les réseaux d'accès, le service demandé ou une politique de l'opérateur.

Selon une première variante, la requête INV ne contient pas de type d'accès demandé AT_{D}. Le serveur d'application obtient un type d'accès AT_{AS} à insérer dans la requête en mettant en oeuvre le processus de décision selon l'invention. Il l'insère ensuite dans la requête INV qu'il transmet au serveur de proximité PA 100 en charge de l'utilisateur appelé.

Selon une deuxième variante, la requête INV contient un type d'accès AT_{D} demandé par l'utilisateur appelant. Dans ce cas, le serveur d'application AS 200 peut accepter ou refuser ce type d'accès en fonction de ses critères de décisions. A titre d'exemple, il peut refuser le type d'accès demandé par le terminal UE_{B} si celui-ci ne correspond pas à un réseau d'accès auquel le terminal UE_{A} est connecté. En variante, il peut refuser un type d'accès AT_{D} néanmoins disponible, parce qu'il ne satisfait pas un critère prédéterminé par l'opérateur, par exemple parce qu'il ne correspond pas à un réseau d'accès autorisé pour le service demandé.

S'il l'accepte, il transmet la requête INV sans modification. S'il le refuse, il remplace au préalable la valeur du type d'accès demandé AT_{D} par celle du type d'accès AT_{AS} qu'il a décidé. Une fois qu'il dispose du type d'accès AT_{D}, AT_{AS} à prendre en compte pour établir la session demandée, le serveur d'application recherche l'adresse de contact AOCⱼ correspondante dans les associations ASS₁, ASS₂ stockées pour l'utilisateur enregistré sous l'adresse AOR_{A}. Une fois qu'il l'a obtenue, il l'insère dans un champ de la requête d'établissement de session INV. Selon l'invention, plusieurs champs de la requête INV peuvent être utilisés à cet effet. On cite, à titre d'exemple :
- l'utilisation d'un champ "maddr" de l'adresse REQUEST URI de la requête d'établissement de session INV;
- en variante, l'adresse REQUEST URI peut aussi être remplacée par l'adresse de contact AOCⱼ.
- une autre possibilité est de créer un paramètre dédié au transport de l'adresse de contact AOCⱼ qu'on ajoute à l'adresse request URI ou à l'en-tête de la requête;
- encore une autre variante est d'insérer l'adresse de contact AOCⱼ dans l'en-tête Route de la requête d'établissement de session INV.

Selon l'invention, sur réception de la requête INV modifiée par le serveur d'application AS 200, le serveur de proximité PA 100 en charge de l'utilisateur demandé, est apte à prendre en compte l'indication de l'adresse de contact AOCⱼ pour router la requête uniquement vers cette adresse de contact, sans mettre en oeuvre le mécanisme de forking sur l'ensemble des adresses de contact cibles stockées pour l'utilisateur demandé.

On notera que, si l'utilisateur du terminal UEA 10 s'est aussi enregistré au réseau 1 depuis un des réseaux d'accès AN1, AN2 par l'intermédiaire d'un autre terminal UEA' (non représenté), le dispositif DG 20 selon l'invention permet de limiter le mécanisme de forking aux adresses de contact associées au type d'accès demandé. Pour bloquer complètement ce mécanisme, le procédé selon l'invention peut être avantageusement combiné à l'usage des identifiants de type UUID URN ou GRUU, décrits précédemment, qui permettent d'identifier de façon unique un terminal d'utilisateur cible.

## Revendications

1. Procédé de gestion d'un utilisateur d'un réseau de télécommunications (1), ledit utilisateur étant connecté à au moins un réseau d'accès (AN₁, AN₂) audit réseau à l'aide d'au moins un premier terminal (UE_{A} 10), dans lequel on met en oeuvre, sur réception d'une requête d'enregistrement (REG) comprenant une adresse d'enregistrement de l'utilisateur (AOR_{A}), au moins une adresse de contact (AOC₁, AOC₂) et au moins un type d'accès (AT₁, AT₂) du terminal, une étape (E₂) d'enregistrement d'au moins une association (ASS₁(AOR_{A}, AOC₁, AT₁)), ASS₂(AOR_{A}, AOC₂, AT₂)) comprenant l'adresse d'enregistrement (AOR_{A}) de l'utilisateur, une adresse de contact (AOC₁) du terminal et un type d'accès (AT₁), dans une base de données (40), et dans lequel, suite à ladite étape d'enregistrement et sur réception d'une requête d'établissement de session (INV) de la part d'un deuxième terminal (UE_{B} 11) à destination de ladite adresse d'enregistrement (AOR_{A}) de l'utilisateur, on met en oeuvre les étapes suivantes :
- obtention (E5) d'au moins une association stockée comprenant ladite adresse d'enregistrement, un type d'accès et une adresse de contact du terminal dans un réseau d'accès;
- obtention (E6) de ladite requête d'établissement de session (INV) d'un type d'accès par l'intermédiaire duquel accéder au terminal demandé; et
- sélection (E7) d'une adresse de contact à laquelle router ladite requête dans les associations stockées en fonction du type d'accès,
**caractérisé en ce que** le type d'accès (AT_{D}) est inséré par ledit deuxième terminal (UE_{B} 11) dans ladite requête d'établissement de session (INV).

2. Procédé de gestion d'un utilisateur d'un réseau de télécommunications (1) selon la revendication 1, **caractérisé en ce que** le type d'accès (AT_{D}) est inséré au sein d'un identifiant (sub-UUID URN, pub-agruu) comprenant explicitement le type d'accès.

3. Procédé de gestion d'un utilisateur d'un réseau de télécommunications (1) selon la revendication 1, **caractérisé en ce que** le type d'accès (AT_{D}) est inséré au sein d'un identifiant (temp-gruu) comprenant une indication permettant d'obtenir le type d'accès associé à l'adresse d'enregistrement et au terminal dudit utilisateur demandé.

4. Dispositif (DG 20) de gestion d'un utilisateur dans un réseau de télécommunications (1) connecté à au moins un réseau d'accès (AN₁, AN₂) au dit réseau à l'aide d'au moins un premier terminal (UE_{A} 10), ledit dispositif étant apte à mettre en oeuvre, sur réception d'une requête d'enregistrement (REG) comprenant une adresse d'enregistrement (AOR_{A}) de l'utilisateur, une adresse de contact (AOC₁, AOC₂) et un type d'accès (AT₁, AT₂) du terminal, des moyens d'enregistrement dans une base de données (40), d'au moins une association entre l'adresse d'enregistrement de l'utilisateur, le type d'accès et l'adresse de contact du terminal, ledit dispositif étant en outre apte, suite à l'enregistrement dudit utilisateur dans le réseau et sur réception d'une requête d'établissement de session (INV) de la part d'un deuxième terminal (UE_{B} 11) à destination de l'adresse d'enregistrement dudit utilisateur, à mettre en oeuvre les moyens suivants :
- obtention, pour ladite adresse d'enregistrement, d'au moins une association entre ladite adresse d'enregistrement, un type d'accès et une adresse de contact du terminal dans un réseau d'accès;
- obtention de ladite requête d'établissement de session (INV) d'un type d'accès par l'intermédiaire duquel accéder au terminal demandé ; et
- choix d'une adresse de contact à laquelle router ladite requête à partir des associations stockées en fonction du type d'accès,
**caractérisé en ce que** le type d'accès (AT_{D}) est inséré par ledit deuxième terminal (UE_{B} 11) dans ladite requête d'établissement de session (INV).

5. Serveur de proximité (PA 100) dans un réseau de télécommunications (1), comprenant des moyens (30) de réception d'une requête d'enregistrement (REG) comprenant une adresse d'enregistrement (AOR_{A}) d'un utilisateur, au moins une adresse de contact (AOC₁, AOC₂) et au moins un type d'accès (AT₁,AT₂) d'un terminal à partir duquel ledit utilisateur s'est connecté à au moins un réseau d'accès audit réseau et des moyens (30) de réception d'une requête d'établissement de session (INV) à destination de l'adresse d'enregistrement dudit utilisateur dans le réseau de télécommunications, **caractérisé en ce qu'**il comprend en outre un dispositif de gestion (DG 20) dudit utilisateur selon la revendication 4.

6. Serveur d'application (AS 200) dans un réseau de télécommunications (1) comprenant des moyens (30) de réception d'une requête d'enregistrement (REG) comprenant une adresse d'enregistrement (AOR_{A}) d'un utilisateur, au moins une adresse de contact (AOC₁, AOC₂) et au moins un type d'accès (AT₁,AT₂) d'un terminal (UE_{A}) à partir duquel ledit utilisateur s'est connecté à au moins un réseau d'accès (AN₁, AN₂) audit réseau et des moyens (30) de réception d'une requête (INV) d'établissement de session à destination de l'adresse d'enregistrement dudit utilisateur dans le réseau de télécommunications, **caractérisé en ce qu'**il comprend en outre un dispositif de gestion (DG 20) dudit utilisateur selon la revendication 4.

7. Dispositif de transmission (DI 50) d'une requête (INV) d'établissement de session dans un réseau de télécommunications (1), à destination d'une adresse d'enregistrement (AOR_{A}) d'un utilisateur, **caractérisé en ce qu'**il comprend des moyens d'insertion dans la requête d'établissement de session d'un type d'accès (AT_{D}) représentatif d'un réseau d'accès, situé entre le réseau de télécommunications et un terminal de l'utilisateur demandé, par l'intermédiaire duquel joindre l'utilisateur demandé, ladite requête étant destinée à être traitée par un dispositif de gestion (DG 20) d'un utilisateur selon la revendication 4.

8. Equipement (PB 300, AS 200), apte à échanger des messages de signalisation avec un terminal (UE_{B} 11) d'un utilisateur connecté à un réseau de télécommunications (1) par l'intermédiaire d'au moins un réseau d'accès (AN₃) audit réseau, **caractérisé en ce qu'**il comprend un dispositif de transmission (DI 50) dans le réseau d'une requête d'établissement de session (INV) émise par le terminal selon la revendication 7.

9. Equipement selon la revendication 8, **caractérisé en ce que** ledit équipement est un terminal d'utilisateur (UE_{B} 11) connecté au réseau de télécommunications.

10. Equipement selon la revendication 9, **caractérisé en ce que** le type d'accès (AT_{D}) est inséré au sein d'un identifiant (sub-UUID URN, pub-agruu) comprenant explicitement le type d'accès.

11. Equipement selon la revendication 9, **caractérisé en ce que** le type d'accès (AT_{D}) est inséré au sein d'un identifiant (temp-gruu) comprenant une indication permettant d'obtenir le type d'accès associé à l'adresse d'enregistrement et au terminal dudit utilisateur demandé.

12. Equipement selon la revendication 8, **caractérisé en ce que** ledit équipement est un serveur d'application (AS 200) du réseau de télécommunications.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de gestion d'un utilisateur selon la revendication 1.

## Patentansprüche

1. Verfahren zur Verwaltung eines Benutzers eines Telekommunikationsnetzes (1), wobei der Benutzer mit mindestens einem Zugangsnetz (AN₁, AN₂) zu dem Netz verbunden ist mithilfe von mindestens einem ersten Endgerät (UE_{A} 10), wobei auf Empfang einer Registrierungsanfrage (REG) hin, welche eine Registrierungsadresse des Benutzers (AOR_{A}), mindestens eine Kontaktadresse (AOC₁, AOC₂) und mindestens einen Zugangstyp (AT₁, AT₂) des Endgeräts umfasst, ein Schritt (E₂) des Registrierens von mindestens einer Verknüpfung (ASS₁(AOR_{A}, AOC₁, AT₁)), ASS₂(AOR_{A}, AOC₂, AT₂)), welche die Registrierungsadresse (AOR_{A}) des Benutzers, eine Kontaktadresse (AOC₁) des Endgeräts und einen Zugangstyp (AT₁) umfasst, in einer Datenbank (40) umgesetzt wird, und wobei nach dem Schritt des Registrierens und auf Empfang einer Sitzungsaufbauanfrage (INV) von Seiten eines zweiten Endgeräts (UE_{B} 11) an Ziel der Registrierungsadresse (AOR_{A}) des Benutzers hin die folgenden Schritte umgesetzt werden:
- Erhalten (E5) von mindestens einer gespeicherten Verknüpfung, welche die Registrierungsadresse, einen Zugangstyp und eine Kontaktadresse des Endgeräts in einem Zugangsnetz umfasst;
- Erhalten (E6) der Sitzungsaufbauanfrage (INV) eines Zugangstyps, über den auf das gewünschte Endgerät zugegriffen werden soll; und
- Auswählen (E7) einer Kontaktadresse, an die die Anfrage geroutet werden soll, in den gespeicherten Verknüpfungen in Abhängigkeit vom Zugangstyp,
**dadurch gekennzeichnet, dass** der Zugangstyp (AT_{D}) vom zweiten Endgerät (UE_{B} 11) in die Sitzungsaufbauanfrage (INV) eingefügt wird.

2. Verfahren zur Verwaltung eines Benutzers eines Telekommunikationsnetzes (1) nach Anspruch 1, **dadurch gekennzeichnet, dass** der Zugangstyp (AT_{D}) innerhalb eines Identifikators (sub-UUID URN, pub-agruu) eingefügt wird, welcher ausdrücklich den Zugangstyp umfasst.

3. Verfahren zur Verwaltung eines Benutzers eines Telekommunikationsnetzes (1) nach Anspruch 1, **dadurch gekennzeichnet, dass** der Zugangstyp (AT_{D}) innerhalb eines Identifikators (temp-gruu) eingefügt wird, welcher eine Angabe umfasst, die es ermöglicht, den mit der Registrierungsadresse und mit dem Endgerät des gewünschten Benutzers verknüpften Zugangstyp zu erhalten.

4. Vorrichtung (DG 20) zur Verwaltung eines Benutzers in einem Telekommunikationsnetz (1), der mit mindestens einem Zugangsnetz (AN₁, AN₂) zu dem Netz verbunden ist mithilfe von mindestens einem ersten Endgerät (UE_{A} 10), wobei das Endgerät in der Lage ist, auf Empfang einer Registrierungsanfrage (REG) hin, welche eine Registrierungsadresse (AOR_{A}) des Benutzers, eine Kontaktadresse (AOC₁, AOC₂) und einen Zugangstyp (AT₁, AT₂) des Endgeräts umfasst, Mittel zum Registrieren, in einer Datenbank (40), von mindestens einer Verknüpfung zwischen der Registrierungsadresse des Benutzers, dem Zugangstyp und der Kontaktadresse des Endgeräts umzusetzen, wobei die Vorrichtung weiter in der Lage ist, nach dem Registrieren des Benutzers im Netz und auf Empfang einer Sitzungsaufbauanfrage (INV) von Seiten eines zweiten Endgeräts (UE_{B} 11) an Ziel der Registrierungsadresse des Benutzers hin die folgenden Mittel umzusetzen:
- Erhalten, für die Registrierungsadresse, von mindestens einer Verknüpfung zwischen der Registrierungsadresse, einem Zugangstyp und einer Kontaktadresse des Endgeräts in einem Zugangsnetz;
- Erhalten, aus der Sitzungsaufbauanfrage (INV), eines Zugangstyps, über den auf das gewünschte Endgerät zugegriffen werden soll; und
- Auswählen einer Kontaktadresse, an die die Anfrage geroutet werden soll, aus den gespeicherten Verknüpfungen in Abhängigkeit vom Zugangstyp,
**dadurch gekennzeichnet, dass** der Zugangstyp (AT_{D}) vom zweiten Endgerät (UE_{B} 11) in die Sitzungsaufbauanfrage (INV) eingefügt wird.

5. Proxy-Server (PA 100) in einem Telekommunikationsnetz (1), welcher Mittel (30) zum Empfangen einer Registrierungsanfrage (REG), welche eine Registrierungsadresse (AOR_{A}) eines Benutzers, mindestens eine Kontaktadresse (AOC₁, AOC₂) und mindestens einen Zugangstyp (AT₁, AT₂) eines Endgeräts umfasst, von dem aus sich der Benutzer mit mindestens einem Zugangsnetz zu dem Netz verbunden hat, und Mittel (30) zum Empfangen einer Sitzungsaufbauanfrage (INV) an Ziel der Registrierungsadresse des Benutzers in dem Telekommunikationsnetz umfasst, **dadurch gekennzeichnet, dass** er weiter eine Vorrichtung zur Verwaltung (DG 20) des Benutzers nach Anspruch 4 umfasst.

6. Anwendungsserver (AS 200) in einem Telekommunikationsnetz (1), welcher Mittel (30) zum Empfangen einer Registrierungsanfrage (REG), welche eine Registrierungsadresse (AOR_{A}) eines Benutzers, mindestens eine Kontaktadresse (AOC₁, AOC₂) und mindestens einen Zugangstyp (AT₁, AT₂) eines Endgeräts (UE_{A}) umfasst, von dem aus sich der Benutzer mit mindestens einem Zugangsnetz (AN₁, AN₂) zu dem Netz verbunden hat, und Mittel (30) zum Empfangen einer Sitzungsaufbauanfrage (INV) an Ziel der Registrierungsadresse des Benutzers in dem Telekommunikationsnetz umfasst, **dadurch gekennzeichnet, dass** er weiter eine Vorrichtung zur Verwaltung (DG 20) des Benutzers nach Anspruch 4 umfasst.

7. Vorrichtung zum Übertragen (DI 50) einer Sitzungsaufbauanfrage (INV) in einem Telekommunikationsnetz (1) an Ziel einer Registrierungsadresse (AOR_{A}) eines Benutzers, **dadurch gekennzeichnet, dass** sie Mittel zum Einfügen, in die Sitzungsaufbauanfrage, eines für ein zwischen dem Telekommunikationsnetz und einem Endgerät des gewünschten Benutzers liegendes Zugangsnetz repräsentativen Zugangstyps (AT_{D}) umfasst, über den der gewünschte Benutzer erreicht werden soll, wobei die Anfrage dazu vorgesehen ist, von einer Vorrichtung zur Verwaltung (DG 20) eines Benutzers nach Anspruch 4 verarbeitet zu werden.

8. Ausrüstung (PB 300, AS 200), welche in der Lage ist, Signalisierungsnachrichten mit einem Endgerät (UE_{B} 11) eines Benutzers auszutauschen, das über mindestens ein Zugangsnetz (AN₃) zu dem Netz mit einem Telekommunikationsnetz (1) verbunden ist, **dadurch gekennzeichnet, dass** sie eine Vorrichtung zum Übertragen (DI 50) einer vom Endgerät nach Anspruch 7 ausgegebenen Sitzungsaufbauanfrage (INV) in das Netz umfasst.

9. Ausrüstung nach Anspruch 8, **dadurch gekennzeichnet, dass** die Ausrüstung ein Benutzerendgerät (UE_{B} 11) ist, welches mit dem Telekommunikationsnetz verbunden ist.

10. Ausrüstung nach Anspruch 9, **dadurch gekennzeichnet, dass** der Zugangstyp (AT_{D}) innerhalb eines Identifikators (sub-UUID URN, pub-agruu) eingefügt wird, welcher ausdrücklich den Zugangstyp umfasst.

11. Ausrüstung nach Anspruch 9, **dadurch gekennzeichnet, dass** der Zugangstyp (AT_{D}) innerhalb eines Identifikators (temp-gruu) eingefügt wird, welcher eine Angabe umfasst, die es ermöglicht, den mit der Registrierungsadresse und mit dem Endgerät des gewünschten Benutzers verknüpften Zugangstyp zu erhalten.

12. Ausrüstung nach Anspruch 8, **dadurch gekennzeichnet, dass** die Ausrüstung ein Anwendungsserver (AS 200) des Telekommunikationsnetzes ist.

13. Computerprogrammprodukt, welches aus einem Kommunikationsnetz herunterladbar und/oder auf einem computerlesbaren Träger gespeichert und/oder durch einen Mikroprozessor ausführbar ist, **dadurch gekennzeichnet, dass** es Programmcodeanweisungen für das Ausführen des Verfahrens zur Verwaltung eines Benutzers nach Anspruch 1 umfasst.

## Claims

1. A method for managing a user of a telecommunications network (1), said user being connected to at least one access network (AN₁, AN₂) to said network using at least one first terminal (UE_{A} 10), comprising implementing, upon receiving a request of record (REG) comprising a user's address of record (AOR_{A}), at least one address of contact (AOC₁, AOC₂) and at least one access type (AT₁, AT₂) of the terminal, a step (E₂) of recording at least one association (ASS₁ (AOR_{A}, AOC₁, AT₁)), ASS₂ (AOR_{A}, AOC₂, AT₂)) comprising the user's address of record (AOR_{A}), an address of contact (AOC₁) of the terminal and an access type (AT₁), in a database (40), and comprising, following said step of recording and upon receiving a request of session initiation (INV) from a second terminal (UE_{B} 11) to said user's address of record (AOR_{A}), implementing the following steps:
- obtaining (E5) at least one stored association comprising said address of record, an access type and an address of contact of the terminal in an access network;
- obtaining (E6) said request of session initiation (INV) of an access type through which one can access the requested terminal; and
- selecting (E7) an address of contact to which said request can be routed in the stored associations as a function of the access type,
**characterised in that** the access type (AT_{D}) is inserted by said second terminal (UE_{B} 11) in said request of session initiation (INV).

2. The method for managing a user in a telecommunications network (1) according to claim 1, **characterised in that** the access type (AT_{D}) is inserted within an identifier (sub-UUID URN, pub-agruu) explicitly comprising the access type.

3. The method for managing a user in a telecommunications network (1) according to claim 1, **characterised in that** the access type (AT_{D}) is inserted within an identifier (temp-gruu) comprising an indication for obtaining the access type associated with the address of record and with the requested terminal of said user.

4. A device (DG 20) for managing a user in a telecommunications network (1) connected to at least one access network (AN₁, AN₂) to said network using at least one first terminal (UE_{A} 10), said device being able to implement, upon receiving a request of record (REG) comprising a user's address of record (AOR_{A}), an address of contact (AOC₁, AOC₂) and an access type (AT₁, AT₂) of the terminal, means for recording into a database (40), at least one association between the user's address of record, the access type and the address of contact of the terminal, said device being further able, following the record of said user in the network and upon receiving a request of session initiation (INV) from a second terminal (UE_{B} 11) to the address of record of said user, to implement the following means:
- obtaining, for said address of record, at least one association between said address of record, an access type and an address of contact of the terminal in an access network;
- obtaining said request of session initiation (INV) of an access type through which one can access a requested terminal; and
- selecting an address of contact to which said request can be routed from the stored associations as a function of the access type,
**characterised in that** the access type (AT_{D}) is inserted by said second terminal (UE_{B} 11) in said request of session initiation (INV).

5. A proxy server (PA 100) in a telecommunications network (1), comprising means (30) for receiving a request of record (REG) comprising an address of record (AOR_{A}) of a user, at least one address of contact (AOC₁, AOC₂) and at least one access type (AT₁, AT₂) of a terminal from which said user has connected to at least one access network to said network and means (30) for receiving a request of session initiation (INV) to the address of record of said user in the telecommunications network, **characterised in that** it further comprises a device for managing (DG 20) said user according to claim 4.

6. An application server (AS 200) in a telecommunications network (1) comprising means (30) for receiving a request of record (REG) comprising an address of record (AOR_{A}) of a user, at least one address of contact (AOC₁, AOC₂) and at least one access type (AT₁, AT₂) of a terminal (UE_{A}) from which said user has connected to at least one access network (AN₁, AN₂) to said network and means (30) for receiving a request of session initiation (INV) to the address of record of said user in the telecommunications network, **characterised in that** it further comprises a device for managing (DG 20) said user according to claim 4.

7. A device for transmitting (DI 50) a request of session initiation (INV) in a telecommunications network (1), to an address of record (AOR_{A}) of a user, **characterised in that** it comprises means for inserting in the request of session initiation an access type (AT_{D}) representative of an access network, located between the telecommunications network and a requested terminal of the user, through which one can reach the requested user, said request being intended to be processed by a device for managing (DG 20) a user according to claim 4.

8. An equipment (PB 300, AS 200), able to exchange signalling messages with a terminal (UE_{B} 11) of a user connected to a telecommunications network (1) through at least one access network (AN₃) to said network, **characterised in that** it comprises a device for transmitting (DI 50) in the network a request of session initiation (INV) emitted by the terminal according to claim 7.

9. The equipment according to claim 8, **characterised in that** said equipment is a user terminal (UE_{B} 11) connected to the telecommunications network.

10. The equipment according to claim 9, **characterised in that** the access type (AT_{D}) is inserted within an identifier (sub-UUID URN, pub-agruu) explicitly comprising the access type.

11. The equipment according to claim 9, **characterised in that** the access type (AT_{D}) is inserted within an identifier (temp-gruu) comprising an indication for obtaining the access type associated with the address of record and with the requested terminal of said user.

12. The equipment according to claim 8, **characterised in that** said equipment is an application server (AS 200) of the telecommunications network.

13. A computer program product downloadable from a communication network and/or stored on a computer readable medium and/or executable by a microprocessor, **characterised in that** it comprises program code instructions for executing the method for managing a user according to claim 1.
